Europäisches Patentamt

European Patent Office

Office européen des brevets

(19)

(11) Veröffentlichungsnummer : **0 108 968**
**B1**

(12) EUROPÄISCHE PATENTSCHRIFT

(45) Veröffentlichungstag der Patentschrift :
20.01.88

(21) Anmeldenummer : 83110653.9

(22) Anmeldetag : 25.10.83

(51) Int. Cl.⁴ : **C 25 B  1/00**, C 01 F  7/42//
B01J21/04

(54) Verfahren zur Herstellung von aktivem Aluminiumoxyd.

(30) Priorität : 09.11.82 HU 360282

(43) Veröffentlichungstag der Anmeldung :
23.05.84 Patentblatt 84/21

(45) Bekanntmachung des Hinweises auf die Patenterteilung : 20.01.88 Patentblatt 88/03

(84) Benannte Vertragsstaaten :
AT BE CH DE FR GB IT LI NL SE

(56) Entgegenhaltungen :
DE-A- 2 555 876
GMELINS HANDBUCH DER ANORGANISCHEN CHE-
MIE,8.Auflage, 1934, System-Nr.35; "Aluminium, Teil
B, Die Verbindungen des Aluminiums",VERLAG CHE-
MIE, GMBH, Berlin, Seiten 100, 101

(73) Patentinhaber : **Magyar Szénhidrogénipari Kutatò-
Fejlesztö Intézet**
**H-2443 Százhalombatta (HU)**

**KÖPORC Elektronikai Alkatrész és Müszaki Kerámiagyártò Vállalat**
**Tárna u. 4**
**H-1106 Budapest (HU)**

(72) Erfinder : **Mándy, Tamás, Dipl.-Chem.**
**Tulipán u. 13**
**H-1022 Budapest (HU)**
Erfinder : **Németh, Lászlò, Dr. Dipl.-Chem.**
**Ságvári sétány 33**
**H-2440 Százhalombatta (HU)**
Erfinder : **Kerti, Jòzsef, Dr. Dipl.-Ing.**
**Vántus u. 6**
**H-1117 Budapest (HU)**
Erfinder : **Grofcsik, Elemer, Dr. Dipl.-Chem.**
**Balzac u. 11**
**H-1136 Budapest (HU)**
Erfinder : **Kerekes, András, Dipl.-Chem.**
**Elek u. 11**
**H-1013 Budapest (HU)**

(74) Vertreter : **von Füner, Alexander, Dr. et al**
**Patentanwälte v. Füner, Ebbinghaus, Finck Mariahilfplatz 2 & 3**
**D-8000 München 90 (DE)**

**0 108 968**

### Beschreibung

Die Erfindung betrifft ein Verfahren zur Herstellung von aktivem Aluminiumoxyd durch innere Elektrolyse von metallischem Aluminium, d. h. durch dessen ohne äußere Stromquelle vorgenommenes anodisches Auflösen und thermisches Zersetzen des entstehenden hochdispersen basischen Aluminiumhydrogels. Das erhaltene aktive Aluminiumoxyd ist unter anderem als Katalysator und als Katalysatorträger geeignet.

Die als Katalysator oder Katalysatorträger verwendeten Aluminiumoxyde sind strukturell kristalline $\gamma$- oder $\eta$-Modifikationen, poröse, disperse Stoffe mit großer spezifischer Oberfläche, die bevorzugt in extrudierter Form, als Pastillen oder Kugeln verwendet werden. An für diese Zwecke vorgesehenes Aluminiumoxyd werden sehr strenge Anforderungen gestellt, sowohl was die physikalisch-mechanischen Eigenschaften wie auch was die chemische Zusammensetzung betrifft. Ein hochreines aktives $\gamma$-Aluminiumoxyd kann zum Beispiel durch die folgenden Daten charakterisiert werden :

chemische Eigenschaften

| | |
|---|---|
| Glühverlust (1 h bei 1 000 °C) | 1,0-2,0 Masse% |
| $SiO_2$ | max. 100 ppm |
| $Na_2O$ | max. 20 ppm |
| $SO_4$ | max. 100 ppm |
| Fe | max. 150 ppm |
| sonstige Metalle | max. 100 ppm |
| $Al_2O_3$ | alles Übrige |

physikalische Eigenschaften

| | |
|---|---|
| spezifische Oberfläche | 150-250 m²/g |
| Porenvolumen | 0,4-0,5 cm³/g |
| Volumengewicht | 0,5-0,6 g/cm³ |
| Abriebverlust | 0,5-1,0 Masse% |
| Bruchfestigkeit | 800-1 000 kN/Korn. |

Die Herstellung eines derartigen aktiven Aluminiumoxydes besteht aus folgenden Schritten : Herstellung eines Aluminiumhydroxyd-Gels geeigneter Qualität, Formung des Hydroxydgels und schließlich seine thermische Zersetzung, bei der die aktive $\gamma$- oder $\eta$-$Al_2O_3$-Struktur entsteht.

Zur Herstellung des Aluminiumhydroxyd-Gels gibt es verschiedene Verfahren. Eine Möglichkeit besteht darin, hochreines Aluminium in Salpetersäure aufzulösen. Dies ist einesteils vorteilhaft, weil durch Einbau der Nitrationen gewisse Vorteile in der Struktur erzielt werden ; nachteilig ist jedoch, daß in dem Maße, wie der Überschuß der Salpetersäure geringer wird, die Reaktion immer langsamer abläuft und auf diese Weise die Produktivität des Prozesses nicht zufriedenstellend ist.

Wie beim chemischen Auflösen von Aluminium meistens, so muß auch hier die Lösung Quecksilberionen enthalten, weil sonst durch die Passivierung des Aluminiums auch in konzentrierter Salpetersäure die Reaktion zum Stillstand kommen würde. Die Anwesenheit von Chloridionen beschleunigt den Lösungsprozeß (obwohl auch bei Anwesenheit von Chlorid Quecksilbersalz benötigt wird), jedoch beeinflussen die Chloridionen die Struktur des Gels in ungünstiger Weise, d. h. sie verringern seine aktive Fläche und damit auch die des daraus hergestellten aktiven Aluminiumoxydes.

Zur Herstellung des Hydroxydgels sind auch Verfahren bekannt geworden, die auf der nachträglichen Entfernung von Fremdionen aus dem durch Reinigung aus natürlichem Tonerdehydrat hergestellten oder aus der Lösung von Aluminiumsalzen durch Ausfällen mit Chemikalien hergestellten Hydroxyd beruhen. Diese Verfahren haben den gemeinsamen Nachteil, daß jede Entfernung von Fremdionen — sei es durch Auswaschen, sei es durch Dialyse — große Volumina erfordert und auch das Tempo, in dem die Konzentration der Fremdionen absinkt, exponentiell zu der Konzentration der Ionen abnimmt. Graphisch dargestellt erinnert die Ionenkonzentrationskurve an die Abkühlkurven, die Diffusions- und Austauschgeschwindigkeit der Ionen von ihrer jeweiligen Konzentration abhängt.

Der durch Waschen erfolgenden völligen Entfernung der Fremdionen ist auch noch eine prinzipielle Grenze gesetzt, da ein Teil dieser Ionen durch isomorphe Substitution oder Dislokationen ins Gitter eingebaut wird, und andere Ionen durch Chemisorption an die Teilchen des Gels gebunden werden.

Zur Herstellung von Katalysatoren wird aber sehr reines Aluminiumoxyd gebraucht. Dieses Bedürfnis konnte mit den Forderungen nach wirtschaftlicher Fertigung bis heute nicht in befriedigender Weise abgestimmt werden.

Die Anwesenheit der Fremdionen kann umgangen werden, wenn man metallisches Aluminium in einem niederen, wasserfreien Alkohol, meistens in Ethyl- oder Isopropylalkohol auflöst und das gebildete Alkoholat mit ionenfreiem Wasser zersetzt. Mit diesem Verfahren kann entsprechend reines Hydroxydgel erhalten werden, jedoch ist das Verfahren durch den im Überschuß einzusetzenden Alkohol sehr teuer.

2

Zur Herstellung von Aluminiumhydroxyd-Gel (s. Gmelins Handbuch der anorganischen Chemie, 8. Aufl., 1934, System Nr. 35. « Aluminium », Teil B, Verlag Chemie GmbH., Berlin, Seiten 100, 101) ist es weiterhin in einem Elektrolyseverfahren möglich, hochreines Aluminium anodisch aufzulösen.

Auf diese Weise kann zwar Hydroxydgel der geeigneten Qualität erhalten werden. Nachteilig ist jedoch, daß dazu Elektroenergie gebraucht wird. Bereits die Tonerdeherstellung, dann die elektrochemische Herstellung und ebenfalls die elektrochemische Reinigung des Aluminiums sind hochgradig energieintensiv. Später addiert sich zu diesen Energiekosten noch die Kalzinierung des Hydroxydgels. Der Elektroenergiebedarf für das Auflösen des Aluminiums ist als ein thermodynamisch unnötiger Aufwand von vorneherein nicht akzeptierbar. Außer den Energiekosten sind auch noch die Investitionskosten der Kommutiervorrichtung und der Erweiterung des elektrischen Netzes zu berücksichtigen. Es ist eine allgemeine Erfahrung, daß bei der Anlage elektrochemischer Objekte in den Investitionskosten meistens die Stromwandler die entscheidende Rolle spielen.

Aufgabe der Erfindung war es nun, den Energieaufwand zu vermindern.

Gegenstand der Erfindung ist also ein Verfahren zur Herstellung von aktivem Aluminiumoxid durch anodisches Auflösen von Aluminium, das dadurch gekennzeichnet ist, daß man vorher durch Eintauchen in eine Quecksilberionen enthaltende Lösung depassivierte Aluminiumkörper als Anode gegen eine kein Amalgam bildende Kathode aus Graphit oder Stahl schaltet, das auf diese Weise erhaltene galvanische Element mit flüssiger Elektrolytlösung füllt, das aus dem aufgelösten Aluminium und dem Elektrolyt in Abwesenheit einer äußeren Stromquelle gebildete Aluminiumhydrogel aus der Zelle entfernt, trocknet und thermisch zersetzt.

Nach einer bevorzugten Verfahrensweise baut man das galvanische Element durch Zusammenschalten mehrerer galvanischer Zellen auf und nimmt die Entleerung des Gels aus diesen Zellen sowie das Auffüllen mit frischem Elektrolyt zu unterschiedlichen Zeitpunkten zyklisch vor.

Weiter ist es bevorzugt, als Elektrolyt einen Nitrationen enthaltenden Elektrolyt zu verwenden, gegebenenfalls zusammen mit einer wäßrigen Lösung von Aluminiumnitrat.

Besonders bevorzugt ist es, Salpetersäure zu verwenden.

Bevorzugt ist es auch, die Nitrationenkonzentration durch Zusatz von Elektrolyt auf einem Wert von 0,1 bis 5,0 vorzugsweise 0,5 bis 2,0 Mol/l, zu halten.

Die Erfindung beruht auf der Erkenntnis, daß eine kontinuierliche anodische Auflösung des Aluminiums und dadurch die Herstellung eines über günstige Eigenschaften verfügenden Hydroxylgels auch ohne äußere Stromquelle, d. h. ohne Energieaufwand möglich ist, wenn man das aufzulösende Aluminium als Anode eines galvanischen Elementes verwendet. Der Elektrolyt des galvanischen Elementes enthält — vorzugsweise neben Nitratanionen — Aluminiumionen. Als Kathode verwendet man einen kein Amalgam bildenden, über eine geringe Wasserstoffüberspannung verfügenden Elektronenleiter, nämlich Stahl oder Graphit. Gemäß einer bevorzugten Ausführungsform der Erfindung werden mehrere der beschriebenen galvanischen Elemente miteinander parallel geschaltet, und das Auffüllen der Zellen mit Elektrolyt, vorzugsweise Salpetersäure, und das Entleeren der Zellen bzw. die Entnahme des gebildeten Hydroxydgels erfolgt nicht gleichzeitig in allen Zellen, sondern mit einer gewissen zeitlichen Verschiebung. In diesem Falle übt die mit der frischeren Elektrolytlösung arbeitende Zelle eine depolarisierende Wirkung auf die Gesamtheit des Systems aus und verhindert dadurch ein Langsamer werden der Elektrodenvorgänge, was sonst infolge des Absinkens der Säurekonzentration unbedingt eintreten würde. Die frisch aufgefüllten Zellen aktivieren die schon seit längerer Zeit arbeitenden, weniger Säure enthaltenden Zellen.

Eine weitere wichtige erfindungsgemäße Erkenntnis ist, daß im erfindungsgemäßen Verfahren kein Quecksilbersalz in die Zellen dosiert werden muß, sondern daß es ausreicht, die als Anode arbeitenden Aluminiumkörper (z. B. Platten, Stäbe) vor dem Einhängen in die Zelle durch Eintauchen in ein quecksilbersalzhaltiges saures Bad zu aktivieren. Der dabei auf der Oberfläche des Aluminiums entstehende, gut haftende Amalgamfilm reicht aus, die Passivierung zu verhindern. Durch diese Maßnahme wird erstens der Bedarf an Quecksilbersalzen herabgesetzt, und zweitens wird weder der Elektrolyt noch das Produkt mit Quecksilber verunreinigt.

Die Praxis erwies, daß es zu einer zufriedenstellenden Aktivierung des Aluminiums ausreicht, die Anoden vor dem Einhängen in die galvanische Zelle etwa 15 Minuten in 1n Salpetersäure, die pro Liter 0,5-1,0 g Quecksilberionen enthält, einer Voraktivierung zu unterziehen. Die salpetersaure Quecksilberlösung wird hergestellt, indem man in konzentrierter Salpetersäure Quecksilber oder Quecksilber (II) oxyd in kleinen Portionen auflöst und aus dieser Stammlösung bekannter Konzentration und Zusammensetzung dann durch Verdünnen das Aktivierungsbad herstellt.

Es ist übrigens eine bekannte Tatsache, daß bei Verunreinigung einer Aluminiumfläche mit Quecksilber, d. h. bei partieller Amalgambildung auf der Oberfläche die sog. katastrophale Korrosion des Aluminiums auch an der Luft eintritt und zum bloßen Aufschluß des Aluminiums demnach die erfindungsgemäße galvanische Zelle gar nicht erforderlich wäre.

Die Korrosion des Aluminiums ist darauf zurückzuführen, daß auf der Aluminiumamalgam-Oberfläche die festhaftende Schutzschicht aus Aluminiumoxyd nicht entstehen kann, die dem Aluminium und seinen Legierungen ihre allgemein bekannte Korrosionsfestigkeit verleiht. Im vorliegenden Fall besteht das Ziel jedoch nicht darin, das Aluminium in irgendeiner Form zu korrodieren, sondern ein Hydroxydgel herzustellen, das über die angegebenen physikalisch-chemischen Eigenschaften verfügt. Bei Korrosion

3

an der Luft und unter sonstigen unkontrollierbaren Bedingungen entsteht nicht das Korrosionsprodukt mit den gewünschten Eigenschaften, und es ist gegenwärtig auch kein Nachbehandlungsverfahren bekannt, mit dem das undefiniert zusammengesetzte Korrosionsprodukt des Aluminiums zu einem Hydroxydgel umgebildet werden könnte, aus dem hochqualitatives $\gamma$-$Al_2O_3$ gewinnbar ist.

Das erfindungsgemäß herstellbare Gel ist vorzugsweise ein basisches Aluminiumnitrat-Hydrogel, d. h. es enthält in molekularer Dispersion $NO_3^-$-Ionen. Es ist bekannt, daß man auf andere Weise hergestelltes Hydrogel vor dem Formen mit etwas Salpetersäure vermischt oder verknetet, d. h. aus einem Teil des Aluminiumhydroxyds basisches Aluminiumnitrat herstellt, weil das aus basischem Aluminiumnitrat bei thermischer Zersetzung entstehende Hydroxyd oder Oxydhydroxyd ein ausgezeichnetes Bindemittel für die Elementarkristalle ist und dem fertigen Katalysator oder Katalysatorträger die notwendige mechanische Festigkeit verleiht. Es wurde erkannt, daß das die $NO_3^-$-Ionen in molekularer Dispersion enthaltende basische Aluminiumnitrat-Hydrogel zur durch thermische Zersetzung erfolgenden Herstellung von aktivem Aluminiumoxyd kontrollierter Oberfläche und Porenstruktur besonders geeignet ist.

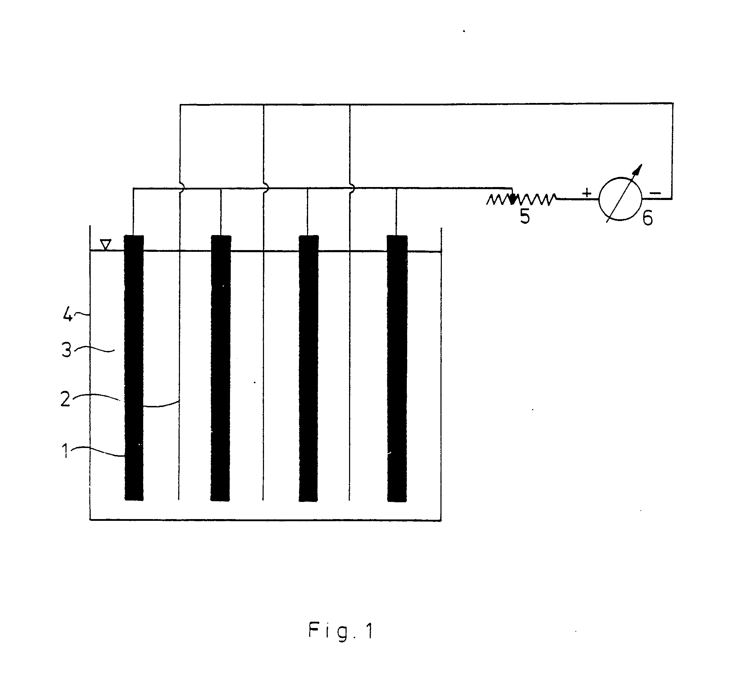

Eine zur Durchführung des Verfahrens besonders geeignete Vorrichtung ist in Fig. 1 dargestellt. Die aus Graphit oder säurefestem Stahl bestehenden Kathoden 1 bilden einen gemeinsamen Pol, ebenso die zwischen ihnen eingehängten Aluminiumanoden 2. In der vorzugsweise Nitrationen enthaltenden Elektrolytlösung 3 erfolgt laufend die galvanische Korrosion der Anoden 2 und damit auch eine Anreicherung an Hydratgel. Das Hydratgel wird diskontinuierlich, vorzugsweise durch Absaugen, entfernt. Der Elektrolyt und das entstehende Gel befinden sich in dem vorzugsweise aus Kunststoff gefertigten Zellengefäß 4. Der fließende galvanische Strom wird mit dem Widerstand 5 reguliert und am Amperemeter 6 angezeigt.

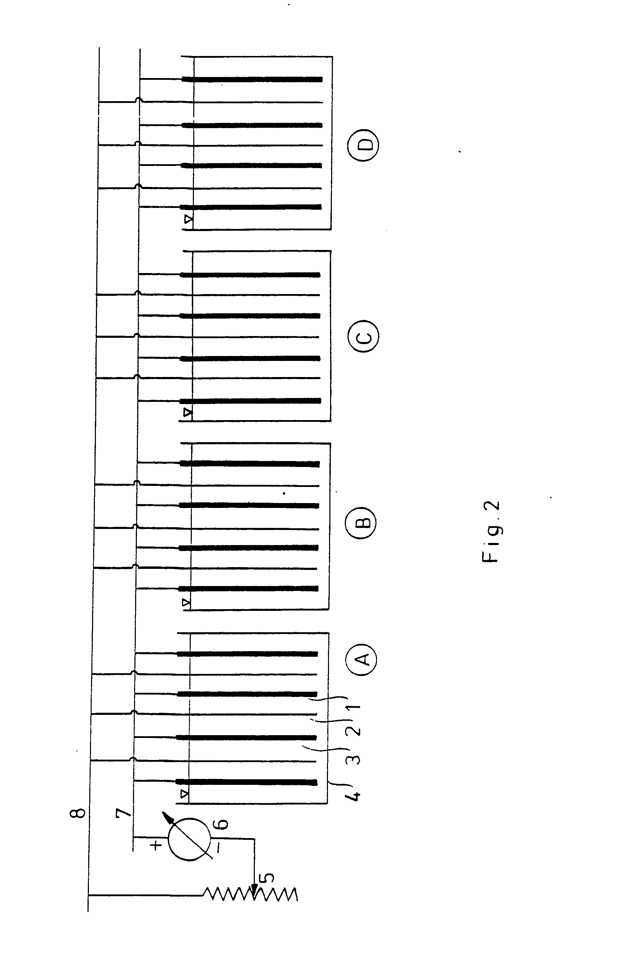

Die Parallelschaltung mehrerer der in Fig. 1 gezeigten galvanischen Zellen ist in Fig. 2 dargestellt. Die Kathoden 1 und die Anoden 2 der identisch aufgebauten galvanischen Zellen A, B, C und D sind alle an die gemeinsame Kathodensammelschiene 7 beziehungsweise Anodensammelschiene 8 angeschlossen. Das Auffüllen der Zellengefäße mit frischem Elektrolyt und das Absaugen des gebildeten Gels werden diskontinuierlich vorgenommen, jedoch zeitlich gegeneinander verschoben. Dadurch ist immer gewährleistet, daß zu jedem Zeitpunkt des Betriebes in einer Zelle verhältnismäßig frischer Elektrolyt vorliegt und dadurch das Potential sämtlicher Elektroden in eine günstige Richtung verschoben wird, d. h. Depolarisation eintritt. Dadurch wird auch die Funktion derjenigen Zellen stimuliert, in denen die Gelbildung schon fortgeschritten ist.

Die Erfindung wird an Hand der folgenden Beispiele näher erläutert.

Beispiel 1

Herstellung von basischem Aluminiumnitrat-Hydrogel in nitrathaltigem Medium unter Verwendung von Stäben aus hochreinem (raffiniertem) Aluminium und zylindrischen Graphitstäben

In ein zylindrisches Kunststoffaß von 200 Liter Volumen werden 12 Stäbe aus je 5 kg raffiniertem Aluminium und 12 zylindrische Graphitstäbe eingehängt. Die Aluminiumstäbe werden vorher bis zu der zu erwartenden Eintauchtiefe mit Voraktivierungslösung behandelt. Die Voraktivierungslösung ist einmolare Salpetersäure, die pro Liter 0,8 g Quecksilberionen enthält. Die Aluminiumstäbe bleiben für 15 Minuten in der Voraktivierungslösung. In der Zelle sind die Aluminium- und Graphitstäbe miteinander abwechselnd nach dem System der schwarzen und weißen Felder auf dem Schachbrett angeordnet. Mittels flexibler, isolierter Leitungen sind einesteils alle Graphitelektroden, zum anderen alle Aluminiumelektroden leitend an die Kathodenbeziehungsweise Anodensammelschiene angeschlossen. Die Zelle wird zu Beginn mit 2molarer Salpetersäure aufgefüllt: zuerst wird mittels Austauscherharz entsalzenes Wasser in das Faß gefüllt, und zu diesem wird die berechnete Menge Salpetersäure gegeben. Der Flüssigkeitsspiegel darf den Anschlußpunkt der flexiblen Leitungen an die Elektroden nicht erreichen. Dementsprechend beträgt das Volumen der Zellenlösung 80 Liter.

Der Stromkreis der auf diese Weise zusammengestellten Zelle wird mit einem Schiebewiderstand hoher Leistung (einem sog. Anlaßwiderstand) und einem Amperemeter mit einem Meßbereich bis 200 A geschlossen. Mit Hilfe des Widerstandes wird zu Beginn der von der sich stark erwärmenden Zelle gelieferte Strom auf einem Wert unter 100 A gehalten, damit die Lösung in der Zelle nicht zu kochen beginnt. Durch die ständige Reaktion der Salpetersäure reichert sich in der Zelle Aluminiumnitrat an, und der pH-Wert stabilisiert sich bei 3,9-4,1. Bei diesem pH-Wert beginnt und verläuft auch die Gelbildung. Mit der Stabilisierung des pH-Wertes stellt sich die Stromstärke — wenn der Widerstand völlig herausgenommen wird — auf etwa 15 A ein, und der Inhalt der Zelle kühlt sich auf Umgebungstemperatur ab. Nach drei Tagen wird das unter der Lösung angesammelte Gel durch Absaugen entfernt, und die Zelle wird wieder mit frischer Salpetersäure aufgefüllt. Dieser Zyklus wird so oft wiederholt, bis die Aluminiumanoden soweit aufgebraucht und dünn geworden sind, daß sie ausgewechselt werden müssen. Nach dem Einhängen neuer, voraktivierter Anoden wird das Verfahren fortgesetzt. Die dünn gewordenen Anodenreste werden in an sich bekannter Weise eingeschmolzen und erneut zu Anoden gegossen.

Aus dem abgesaugten Gel, das in molekularer Verteilung $NO_3$-Ionen enthält, wird der größte Teil des Wassergehaltes durch Zentrifugieren oder durch Altern in an sich bekannter Weise entfernt, dann wird das Gel zu Fäden von 1,5 mm Durchmesser extrudiert, getrocknet und schließlich bei 500-700 °C thermisch zersetzt. Das erhaltene hochreine aktive Aluminiumoxyd ist seiner Struktur nach $\gamma$-$Al_2O_3$, seine chemische Zusammensetzung ist in der folgenden Tabelle 1 angegeben.

Tabelle 1

Die Eigenschaften des erfindungsgemäß hergestellten $\gamma$-Aluminiumoxydes

| Parameter | Beispiel 1 | Beispiel 2 |
|---|---|---|
| Glühverlust Masse% 1 h/1000°C | 1,4 | 1,5 |
| $SiO_2$ Masse% | 0,08 | 0,09 |
| $Na_2O$ -"- | 0,009 | 0,008 |
| Fe -"- | $< 0,001$ | $< 0,001$ |
| Hg -"- | $< 0,001$ | $< 0,001$ |
| $Al_2O_3$ -"- | das übrige | das übrige |
| spezifische Oberfläche $m^2/g$ | 180-240 | 180-240 |
| Porenvolumen $cm^3/g$ | 0,52 | 0,55 |
| Raumgewicht $g/cm^3$ | 0,64 | 0,62 |
| Bruchfestigkeit kN/Korn | 800 | 850 |

Beispiel 2

Herstellung von basischem Aluminiumnitrat-Hydrogel in mehreren Zellen

Es wird der in Beispiel 1 beschriebene Zellentyp verwendet, jedoch zwecks Intensivierung des Prozesses werden sechs Zellen gleichzeitig betrieben. Die Kathoden aller Zellen werden an die Kathodensammelschiene, und alle Anoden an die Anodensammelschiene angeschlossen. Alle 8 Stunden wird in jeweils 2 Zellen die Lösung erneuert, nach 8 Stunden in zwei anderen, und nach weiteren 8 Stunden in den letzten beiden Zellen. Auf diese Weise wird erreicht, daß in jeder Zelle täglich einmal das Gel abgesaugt und die Lösung erneuert wird. Durch das Parallelschalten der Zellen und ihren zeitlich gegeneinander verschobenen Betrieb wird die Produktivität im Vergleich zu der Verfahrensweise gemäß Beispiel 1 etwa verdreifacht ; die sonst aller drei Tage fällige Entleerung kann schon nach einem Tag vorgenommen werden. Das gewonnene Hydrogel wird auf die im Beispiel 1 beschriebene Weise zu hochreinem Aluminiumoxyd aufgearbeitet, dessen Qualitätsparameter in der Tabelle 1 angegeben sind.

**Patentansprüche**

1. Verfahren zur Herstellung von aktivem Aluminiumoxid durch anodisches Auflösen von Aluminium, dadurch gekennzeichnet, daß man vorher durch Eintauchen in eine Quecksilberionen enthaltende Lösung depassivierte Aluminiumkörper als Anode gegen eine kein Amalgam bildende Kathode aus Graphit oder Stahl schaltet, das auf diese Weise erhaltene galvanische Element mit flüssiger Elektrolytlösung füllt, das aus dem aufgelösten Aluminium und dem Elektrolyt in Abwesenheit einer äußeren Stromquelle gebildete Aluminiumhydrogel aus der Zelle entfernt, trocknet und thermisch zersetzt.

2. Verfahren nach Anspruch 1, dadurch gekennzeichnet, daß man das galvanische Element durch Zusammenschalten mehrerer galvanischer Zellen aufbaut und die Entleerung des Gels aus diesen Zellen sowie das Auffüllen mit frischem Elektrolyt zu unterschiedlichen Zeitpunkten zyklisch vornimmt.

3. Verfahren nach einem der Ansprüche 1 oder 2, dadurch gekennzeichnet, daß man als Elektrolyt einen Nitrationen enthaltenden Elektrolyt, gegebenenfalls zusammen mit einer wäßrigen Lösung von Aluminiumnitrat, verwendet.

4. Verfahren nach Anspruch 3, dadurch gekennzeichnet, daß man Salpetersäure verwendet.

5. Verfahren nach Anspruch 3 oder 4, dadurch gekennzeichnet, daß man die Nitrationenkonzentration durch Zusatz von Elektrolyt auf einem Wert von 0,1 bis 5,0 vorzugsweise 0,5 bis 2,0 Mol/l, hält.

**0 108 968**

**Claims**

1. A process for the production of active aluminium oxide by the electrolytic dissolution of aluminium, characterised in that aluminium bodies which have first been depassivated by immersion in a solution containing mercury ions are placed as the anode in an electrolytic circuit with a graphite or steel cathode which does not form an amalgam, the voltaic cell thus formed is filled with a liquid electrolyte solution and, the aluminium hydrogel thus formed by the dissolved aluminium and the electrolyte in the absence of an electrical power source is removed from the cell, dried and thermally decomposed.

2. A process according to claim 1, characterised in that the voltaic battery is built up by the connection in circuit of a plurality of voltaic cells, and that the removal of the gel from these cells and the topping up with fresh electrolyte is carried out cyclically at different times.

3. A process according to one of claims 1 and 2, characterised in that an electrolyte containing nitrate ions, in some cases together with an aqueous solution of aluminium nitrate, is used as the electrolyte.

4. A process according to claim 3, characterised in that nitric acid is used.

5. A process according to claim 3 or 4, characterised in that the concentration of nitrate ions is kept to a value from 0.1 to 5.0, and preferably from 0.5 to 2.0 Mol/litre by the addition of electrolyte.

**Revendications**

1. Procédé pour la production d'oxyde d'aluminium actif par dissolution anodique d'aluminium, caractérisé par le fait que des corps en aluminium dépassivés par immersion dans une solution renfermant des ions de mercure sont tout d'abord branchés, en tant qu'anode, en vis-à-vis d'une cathode en graphite ou en acier ne formant aucun amalgame ; par le fait que l'élément galvanique ainsi obtenu est empli de solution électrolytique fluide ; et par le fait que l'hydrogel d'aluminium formé à partir de l'aluminium dissous et de l'électrolyte, en l'absence d'une source externe de courant, est enlevé de la cellule, mis à sécher et décomposé thermiquement.

2. Procédé selon la revendication 1, caractérisé par le fait qu'on forme l'élément galvanique par branchement conjoint de plusieurs cellules galvaniques, et qu'on procède cycliquement, à des instants différents, au vidage du gel hors de ces cellules ainsi qu'à l'emplissage par de l'électrolyte frais.

3. Procédé selon l'une des revendications 1 ou 2, caractérisé par le fait qu'on utilise, en tant qu'électrolyte, un électrolyte renfermant des ions nitrate éventuellement conjugué à une solution aqueuse de nitrate d'aluminium.

4. Procédé selon la revendication 3, caractérisé par le fait qu'on utilise de l'acide nitrique.

5. Procédé selon la revendication 3 ou 4, caractérisé par le fait qu'on maintient la concentration en ions nitrate par ajout d'électrolyte, à une valeur de 0,1 à 5,0, de préférence de 0,5 à 2,0 Mol/l.

6

Fig. 1

1

Fig. 2

0 108 968